# EUROPEAN PATENT SPECIFICATION

(11) **EP 2 381 511 B1**
(45) Date of publication and mention of the grant of the patent: **18.01.2017**
(21) Application number: 11175009.7
(22) Date of filing: 14.02.2008
(51) Int. Cl.: H01M 10/625, H01M 10/6563, H01M 10/647, H01M 10/6557, H01M 10/6567, H01M 10/613, H01M 2/16, H01M 10/34, H01M 10/28, H01M 10/04, H01M 10/24

(54) **Battery and its heat transfer structure**
Batterie und dessen Wärmetransportstruktur
Batterie et sa structure de transfert de chaleur

(30) Priority: 14.02.2007 JP 2007033954
(43) Date of publication of application: 26.10.2011
(62) Divisional of application: 08710378.4
(73) Proprietor: KAWASAKI JUKOGYO KABUSHIKI KAISHA, Kobe shi, Hyogo 650-8670 (JP)
(72) Inventor: Tsutsumi, Kazuo, Kobe-shi, Hyogo 652-0884 (JP); Nishimura, Kazuya, Kobe-shi, Hyogo 652-0884 (JP)
(74) Representative: Lees, Gregory Alexander

(56) References cited:
- EP-A1- 0 177 225
- EP-A1- 1 139 483
- EP-A1- 1 143 541
- US-A- 5 798 189
- US-A1- 2003 207 156

## Description

### Technical Field

The present invention relates to a battery and a heat exchanger structure thereof.

### Background Art

Recently, the pursuit of higher quality such as good performance, high safety, long term quality guaranteed and the like is strongly made to an alkali battery which is used as portable use, mobile use, fixed use and the like. Particularly, a high power is demanded to a hybrid car which draws attention of the general public, a power tool and the like. It is requested that the alkali battery which is applied to such apparatuses shall be provided with high power and high energy density. Particularly, a nickel hydrogen battery is a secondary battery which is provided with a cathode comprising nickel hydroxide as main active material and an anode comprising hydrogen occluding alloy as main active material. Since the nickel hydrogen battery has high energy density and high reliability, it has come rapidly into wide use.

Well, the battery's performance is certainly decided by an electrode's performance and greatly dependent on a separator's performance. A role of the separator is to insulate and separate a cathode from an anode each other. In addition to the above role, the separator for an airtight type nickel hydrogen battery is requested to have the following important function.

That is, in case of charging a battery, water contained in an electrolytic solution is electrolyzed. As a result, oxygen gas is generated at the cathode. It is necessary that the oxygen gas shall be absorbed by hydrogen contained in the hydrogen occluding alloy of the anode (reacting oxygen with hydrogen to be converted to water) and the increase in internal pressure of the battery shall be controlled. Accordingly, the separator is requested to have a function such that the oxygen gas generated at the cathode can permeate through the separator into the anode side (oxygen-permeating function) in orde to control the increase in internal pressure of the battery. In the airtight type battery, the electrolytic solution is impregnated into the separaror and in order to conduct a smooth cell reaction, the separator needs to have a function keeping the electrolytic solution requirements (solution-keeping function). The oxygen-permeating function and the solution-keeping function are conflicting each other to the structure of the separator.

Because, if the size of gaps between fibers constituting the separaror gets larger and the number of the gaps get smaller, the oxygen gas permeates easily through the separator but it is difficult to keep the electrolytic solution inside the separator. On the other hand, if the size of gaps between fibers constituting the separaror gets smaller and the number of the gaps get larger, the electrolytic solution occupies the whole space of gaps. As a result, a course of oxygen for permeation is taken away and it is not possible to keep enough oxygen-permeating function. That is, in order to keep the fixed oxygen-permeating function, one conceivable way is to decrease the quantity of the electrolytic solution and keep enough volume for permeation by gas. But, if the quantity of the electrolytic solution is small, it leads to dry-out (drying up) and a short life of the battery. Furthermore, in this case, it is necessary to do an additional handling for providing a hydrophilic property to the separator for the electrolytic solution to be surely impregnated into the separator.

As prior arts of this field, for example, the following separator is disclosed in patent references No.1 and No.2 :
"A separator is divided into one sheet having hydrophilicity and another sheet having hydrophobicity, and the sheet having hydrophilicity is taken charge of solution-keeping function and the other sheet having hydrophobicity is taken charge of oxygen-permeating function by controlling the impregnation of electrolytic solution."

That is, patent reference No.1 sets forth the following separator for separating a hydrophilic portion from a hydrophobic portion:
"Firstly, a polyethylene film and the like is fusion-connected to a fiber sheet which is mainly composed of hydrophobic fiber such as polypropylene fiber or the fiber sheet is coated with a hydrophobic resin. Secondly, hydrophilicity is given to the above fiber sheet by means of impregnation, applying or coating of hydrophilic resin. Thirdly, a separator consisiting of the hydrophilic fiber sheet comprising partly the hydrophobic portion can be obtained by removing the above polyethylene film or the hydrophobic resin. "

But, in the sheet-shaped separator consisting of fiber, the fiber is normally oriented along the plane direction. And the hydrophilic resin is liable to be impregnated along the longitudinal direction of the oriented fiber. Accordingly, the impregnation along the plane direction of the sheet tends to progress as well as the impregnation along the thickness direction of the sheet. Therefore, it is difficult to keep the hydrophobic portion because the hydrophilic resin is impregnated underneath the coating layer of the hydrophobic resin.

Patent reference No.2 sets forth a separator in which a hydrophobic gas permeating membrane is fusion-connected so as to cover an opening formed partly in a hydrophilic ion-permeable membrane. But, since the opening has a diameter of 6 mm and the opening is large, it is very difficult to provide many hydrophobic portions such that each hydrophobic portion has small area.

In short, it is preferable to provide a separator with hydrophobicity in order to improve the oxygen-permeating function and it is preferable to provide a separator with hydrophilicity in order to improve the solution-keeping function. But, as described in patent references No.1 and 2, if the separator is divided into the hydrophilic portion and the hydrophobic portion, since active material of cathode or anode is requested to have the oxygen-permeating function and the solution-keeping function, it is preferable that the hydrophilic portions and the hydrophobic portions would be as fine as possible and mingle together. However, it is difficult to realize it according to the separators set forth in patent references No.1 and 2. It is troublesome to divide correctly the separator into fine hydrophilic portion and fine hydrophobic portion. The cost of production is extremely increased.

Besides, as described above, although oxygen gas generated at the cathode by the cell reaction permeates through the separator to be absorbed into hydrogen contained in the hydrogen occluding alloy of the anode, oxygen is consumed by oxidizing various materials. As a result, surplus hydrogen which has not reacted with oxygen is apt to accumulate in the anode side. Therefore, the anode is configured to have an excessive chargeable volume, and so, the anode is made larger than the cathode. However, even if the anode is larger than the cathode, the internal pressure of the anode is going up due to the accumulated hydrogen and it causes the damage for the anode.

As described above, an airtight type nickel hydrogen battery which can continue smoothly the cell reaction has not been proposed so far.

Generally, in order to conduct the cell reaction smoothly, the temperature of the constituent parts of the battery is preferably within the range of about 25 to 50 °C . Particularly, since the inside of the airtight type battery is liable to be filled with heat generated by the cell reaction, deterioration of the battery is promoted. Accordingly, it is desirable to cool the airtight type battery with good cooling means. But, if the battery is excessively cooled, the progress of the cell reaction is suppressed. Therefore, the battery has preferably a pertinent heat exchanger structure so as to conduct the cell reaction smoothly without promoting its deterioration. However, the heat exchanger structure of the battery which can achieve the above object has not been proposed as yet.
Patent Reference No.1: Japanese Laid-Open Patent Application Publication No.Hei 6-103969
Patent Reference No.2: Japanese Laid-Open Patent Application Publication No.Hei 5-129014

A further exemplary airtight nickel hydrogen battery is disclosed in EP 1143541.

### Disclosure of Invention

### Problems to be solved by the Invention

In view of the forergoing, the object of the present invention is to provide a battery which has a simple structure with good durability and can continue a cell reaction smoothly, and a heat exchanger structure thereof.

### Means for soloving the Problems

The present invention provides a heat exchanger structure of battery unit multilayer comprising a plurality of battery units layered one upon the other, each battery unit comprising: an electrolytic solution filled between a cathode current collector and an anode current collector that are disposed face to face with each other; a plurality of cathode sheets containing a cathode active material extending from the cathode current collector towards the anode current collector; a plurality of anode sheets containing an anode active material extending from the anode current collector towards the cathode current collector, wherein the cathode sheets and the anode sheets are installed alternately facing each other; and a separator that permits passage of ions but does not permit passage of electrons interposed between adjacent cathode and anode sheets, wherein a heat exchanger plate made of nickel-plated aluminium is interposed between two adjacent battery units so as to be in contact with the cathode current collector of one battery unit and the anode current collector of the other battery unit, and a route for heat transmitting medium consisting of gas or liquid is provided inside the heat exchanger plate.

In a preferred aspect, the battery unit multilayer is airtight and the separator is made of a hydrophobic material.

In the present invention, for example, air, water or oil can be used as a medium for transmitting heat but other materials can be used. The well-known whole medium for transmitting heat consisting of gas or liquid can be suitably applied to the present invention.

In the present invention, the word of "hydrophobicity" denotes that wettability is inferior in an water-solution type electrolytic solution. Specifically, the phenomenon of " hydrophobicity" is easily illustrated by the following example:
When gas is permeating through a separator made of hydrophobic material, an electrolytic solution is separted from the separator and a route of gas for permeation is formed in the separator. This instance represents the phenomenon of "hydrophobicity" .

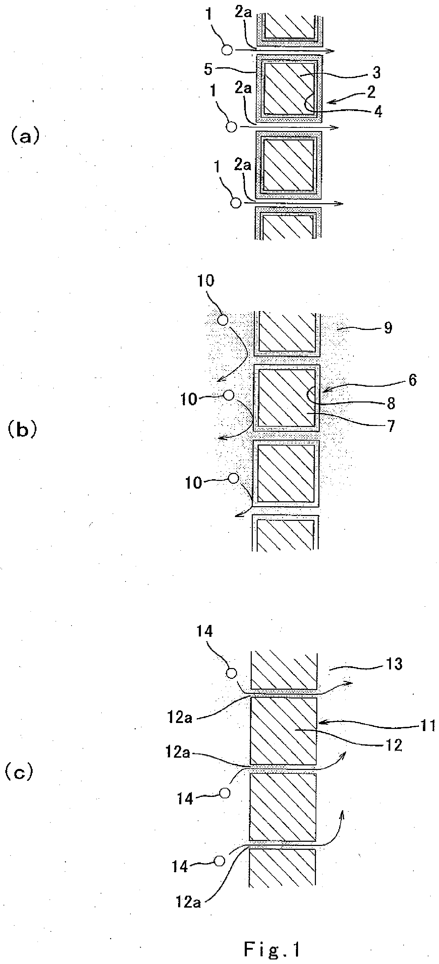

Next, the function of the separator made of hydrophobic material will be given in more detail with reference to figure 1.

An airtight type battery called dry cell is generally known. In the dry cell, as shown in figure 1(a), a separator 2 dividing cathode side on left and anode side on right has a configuration that a hydrophobic material 3 is coated with a hydrophilic coating 4 and a small amount of electrolytic solution 5 needed for assuring ion's movement (such a degree that the hydrophilic coating 4 gets wet) is applied to the hydrophilic coating 4. Since the electrolytic solution 5 is a little quantity of such a degree that the hydrophilic coating 4 gets wet, is formed a gap 2a between the materials constituting the separator 2 so that oxygen 1 generated at cathode side on left by the cell reaction can move to anode side on right. And so, the oxygen 1 is consumed at anode side. Accordingly, it is possible to make the dry cell airtight. But, as described above, the electrolytic solution 5 applied to the separator 2 is small, and a reaction in which oxygen generated at the cathode side is reacted with hydrogen at anode side to become water cannot go ahead in a short time because hydrogen contained in the electrolytic solution at anode side is small. It leads to dry-out (drying up) and the dry cell cannot be used.

As shown in figure 1(b), in the so-called vent type battery (open type battery), a separator 6 dividing cathode side on left and anode side on right has a configuration that a hydrophobic material 7 is coated with a hydrophilic coating 8 and an electrolitic solution 9 is filled enough. There is no gap corresponding to the gap 2a between the materials constituting the separator 2 shown in figure 1 (a). Accordingly, as a result of the cell reaction, oxygen 10 generated at cathode side on left cannot move to the anode side on right due to obstruction of the electrolytic solution 9. Therefore, the oxygen 10 is going up to the upper space inside the battery and is emitted to the outside.

Thus, a conventional airtight type battery has disadvantages of a short life as well as a troublesome handling of hydrophilic treament to a separator. Open type battery has a long life but a disadvantage of a troublesome handling of hydrophilic treament to the separator as well as the airtight type battery. Considerable cost is needed for conducting the hydrophilic treatment so that the whole or the surface of the separator essentially made of hydrophobic material may be provided with hydrophilicity.

Therefore, as shown in figure 1 (c), when a separator 11 is made from a hydrophobic material 12, even if an electrolytic solution 13 is filled enough, as a result of the cell reaction, oxygen 14 generated at cathode side on left forces its way through the electrolytic solution in gap 12a between the materials constituting the separator 11 made of hydrophobic material 12 and moves to anode side on right. The oxygen 14 is consumed by reacting with hydrogen.

Thus, if the present invention adopts an airtight type battery in which a separator is made of hydrophobic material and an electrolytic solution is filled enough, a long life can be attained without dry-out , and low cost can be achieved because a hydrophilic treament is unnecessary to a separator, and energy density can be improved because of no upper space, and maintenance free can be realized owing to airtight type.

### Effects of the Invention

In accordance with the invention set forth in claim 1, since a temperature of the battery can be maintained within the appropriate range by a medium for transmitting heat which is carrying along a carryng route, deterioration of the battery is not going ahead and the cell reaction can be conducted smoothly.

In accordance with the invention set forth in claim 2, electrolytic solution requirements can be filled in a vessel and a separator is made of a hydrophobic material. Accordingly, since oxygen gas generated at the cathode by a cell reaction permeates smoothly through the separator, solution-keeping function and oxygen-permeating function can be obtained. Since electrolytic solution requirements is filled in the vessel, a life of battery does not get short and durability can be improved. Furthermore, since a hydrophilic treament is unnecessary, a production cost can be kept down. Besides, it is possible to improve energy density and realize maintenance free.

### Brief Description of Drawings

Figure 1 (a) is an enlarged view showing a separator of a conventional airtight type dry cell and the closed-by. Figure 1 (b) is an enlarged view showing a separator of a conventional open type battery and the closed-by. Figure 1 (c) is an enlarged view showing a hydrophobic separator of the present invention and the closed-by.
Figure 2 is a schematic view showing in section an airtight type nickel hydrogen battery.
Figure 3 (a) is a schematic view showing in section another airtight type nickel hydrogen battery. Figure 3 (b) is a perspective view showing part of Figure. 3(a).
Figure 4 is a schematically perspective view showing a cylindrical cell whose part is removed and section is revealed.
Figure 5 is a schematically view showing in section a cubic or rectangular parallele-piped cell.
Figure 6 is a perspective view showing a battery unit multilayer with a heat exchanger structure which is cooled by a fan and a wind tunnel.
Figure 7 (a) is a view showing longitudinal section of one example of a battery unit multilayer with a heat exchanger structure. Figure 7 (b) is a front view showing the cathode plate and the anode plate of Figure 7(a).
Figure 8 is a perspective view showing a heat exchanger plate.
Figure 9 is a view showing lateral section of an embodiment of a battery unit multilayer with a heat exchanger structure in accordance with the present invention.
Figure 10 is a view showing a travelling direction of air flow inside the heat exchanger plate of the battery unit multilayer of Figure 9. An insulating plate is omitted.
Figure 11 is a view showing a travelling direction of heat flow inside the battery unit multilayer of Figure 9.
Figure 12 is a schematic view showing in section an airtight type battery.

### Explanation of Numerals

- 1: oxygen
- 2: separator
- 3: hydrophobic material
- 4: hydrophilic coating
- 5: electrolytic solution
- 6: separator
- 7: hydrophobic material
- 8: hydrophilic coating
- 9: electrolytic solution
- 10: oxygen
- 11: separator
- 12: hydrophobic material
- 13: electrolytic solution
- 14: oxygen
- 21: ion-permeable separator
- 22: anode vessel
- 23: cathode vessel
- 24: anode powdered active material
- 25: cathode powdered active material
- 26: anode current collector
- 27: cathode current collector
- 28: load means or power generating means
- 29: electrolytic solution interface
- 30: wiring
- 31: wiring
- 41: unit battery
- 42: ion-permeable separator
- 43: cathode vessel
- 44: anode vessel
- 45: cathode current collector
- 46: anode current collector
- 47: current collecting member
- 48: oxygen gas cylinder
- 49: pressure regulating valve
- 50: route
- 51a, 51b, 51c, 51d, 51e, 51f: valve
- 52a, 52b, 52c, 52d, 52e, 52f: valve
- 53: fan
- 61: cathode active material sheet
- 62: ion-permeable separator
- 63: anode active material sheet
- 64: anode terminal
- 65: cathode terminal
- 71: cathode active material sheet
- 72: ion-permeable separator
- 73: anode active material sheet
- 74: cathode terminal
- 75: anode terminal
- 76: insulator
- 77: insulator
- 81: battery unit multilayer
- 81a: battery unit multilayer
- 82: air carrying space
- 83a: intake fan
- 83b: intake fan
- 84: air carrying space
- 85: cathode plate
- 86: anode plate
- 87: ion-permeable separator
- 88: air carrying space
- 89: current conducting member
- 90, 91, 92, 93: insulating plate
- 94: cathode terminal
- 95: anode terminal
- 96: heat exchanger plate
- 97: air carrying route
- 98: battery unit multilayer
- 99: cathode current collector
- 100: anode current collector
- 101: ion-permeable separator
- 102: electyrolytic solution
- 103: cathode sheet
- 104: anode sheet
- 105: unifying cathode current collector
- 106: unifying anode current collector
- 107: insulating plate
- 108: insulating plate
- 111: cathode current collector
- 112: anode current collector
- 113: insulator
- 114: ion-permeable separator
- 115: cathode vessel
- 116: anode vessel
- 117: non woven fabric made of polypropylene fiber
- 118: formed matter made of nickel foam
- 119: non woven fabric made of polypropylene fiber
- 120: formed matter made of nickel foam

### Best Mode for Carrying Out the Invention

The following description of the best mode for carrying out the invention should be read with reference to the drawings wherein reference numerals indicate elements throughout plural views. The detailed description and drawings illustrate examples of various embodiments of the claimed invention, and are not intended to be limiting. It is possible to alter or modify it properly without deviating from the extent of the present invention.

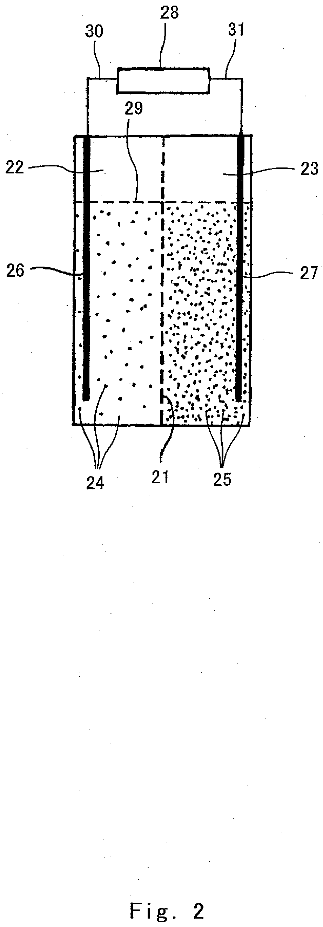

Figure 2 is a schematic view showing in section one example of
an airtight type nickel hydrogen battery. In figure 2, a hydrophobic separator 21 (which does not have hydrophilic property at all), which is made of non woven fabric of polypropylene fiber that permites passage of ions but does not permit passage of electron, is interposed between an anode vessel 22 and a cathode vessel 23. Since the separator 21 is hydrophobic, an electrolytic solution was filled into the anode vessel 22 and the cathode vessel 23 as described below. That is, by a process that the electrolytic solution was squeezed into the inside of the battery under reduced pressure (internal pressure of about 1000 Pa or less), an electrolytic solution (KOH water solution) comprising anode powdered active material (hydrogen occluding alloy powder) 24 was filled into the anode vessel 22 and an electrolytic solution (KOH water solution) comprising cathode powdered active material (nickel hydroxide powder) 25 was filled into the cathode vessel 23.

As a combination of anode and cathode active materials, for example, a combination of hydrogen occluding alloy and nickel hydroxide can be used. One example of hydrogen occluding alloy is La_{0.3}(Ce,Nd)_{0.15}Zr_{0.05}Ni_{3.8}Co_{0.8}Al_{0.5}.

Furthermore, for instance, KOH water solution, NaOH solution, LiOH solution and the like can be used as an electrolytic solution.

The separator 21 is made of hydrophobic material (which does not have hydrophilic property at all) but since the separator 21 is always in contact with alkaline electrolytic solution, the hydrophobic material for the separatror 21 has preferably a good chemicals-resistance. For example, the examples of the fibers which are excellent in chemicals-resistance are as follows: polyolefin fiber such as polyethylene fiber and polypropylene fiber, polyphenylene sulfide fiber, polyfluoroethylene fiber, polyamide fiber. These fibers can be preferably applied to the separator of the present invention. By using these fibers, a fiber sheet such as woven fabric, knit fabric, non woven fabric, cotton thread and flat braid can be formed. Woven fabric and non woven fabric, among other things, have high tensile strength and good shape stability and are not broken easily at a time of assembling the battery. Accordingly, woven fabric and non woven fabric can be preferable used. Woven fabric includes plain weave, sateen weave, twill weave and the like. Non woven fabric can be obtained by the following processes (1), (2) and (3): (1) Fiber webs are formed by card process, airing process, spun-bonding process, melt-blowing process and the like, and the fiber webs are intertwined each other by needle punch, water flow and the like; (2) Fiber webs containing heat-fusiable fiber are fusion-welded by heat treatment or a combination of heat treatment and pressure treatment.; (3) Fiber webs are adhered one another by adhesive. Of course, non woven fabric can be also obtained by the other process.

An anode current collector (nickel metal plate) 26 having electrical conductive properties and a cathode current collector (nickel metal plate) 27 having electrical conductive properties are provided in the anode vessel 22 and the cathode vessel 23 respectively. The anode current collector 26 and the cathode current collector 27 are connected to load means 28 (in case of discharging) or power generating means 28 (in case of charging). Numeral 29 denotes an electyrolytic solution interface. The material which undergoes no deterioration such as corrosion in an alkali electrolytic solution and does not permit passage of ions and has electrical conductive properties can be used as the current collectors 26 and 27. For example, nickel metal plate, nickel metal foil, carbon plate, nickel-plated iron plate, nickel-plated stainless steel plate, nickel-plated carbon plate and the like can be used as the material for current collectors.

Next, with respect to the battery of the present embodiment, the mechanism of charging and discharging will be described in detail below.

### (Charging)

In a charging reaction, as shown in figure 2, when the battery is connected to the power generating means 28, an electron released from the power generating means 28 arrives at the anode current collector 26 through an wiring 30. The electron reacts directly with the anode powdered active material 24 of the anode vessel 22 from the anode current collector 26 or reacts with the anode powdered active material 24 while the electron moves from one place to another place in the electrolytic solution of the anode vessel 22. Anion generated by the anode powdered active material 24's acceptance of electron premeates through the separator 21 and moves into the cathode vessel 23. In the cathode vessel 23, the anion reacts with the cathode powdered active material 25 to release electron. The electron moves directly or through the electrolytic solution of the cathode vessel 23 to the cathode current collector 27, and is delivered to the power generating means 28 through an wiring 31.

### (Discharging)

In a discharging reaction, as shown in figure 2, when the battery is connected to the load means 28, an electron released from the load means 28 arrives at the cathode current collector 27 through the wiring 31. The electron reacts directly with the cathode powdered active material 25 of the cathode vessel 23 from the cathode current collector 27 or reacts with the cathode powdered active material 25 while the electron moves from one place to another place in the electrolytic solution of the cathode vessel 23. Anion generated by the cathode powdered active material 25's acceptance of electron premeates through the separator 21 and moves into the anode vessel 22. In the anode vessel 22, the anion reacts with the anode powdered active material 24 to release electron. The electron moves directly or through the electrolytic solution of the anode vessel 22 to the anode current collector 26, and is supplied to the load means 28 through the wiring 30.

In the above charging and discharging reactions, the oxygen gas generated in the cathode vessel 23 permeates through the hydrophobic separator 21 and moves into the anode vessel 22. The oxygen gas reacts with hydrogen contained in the active material consisting of hydrogen occluding alloy to be converted to water.

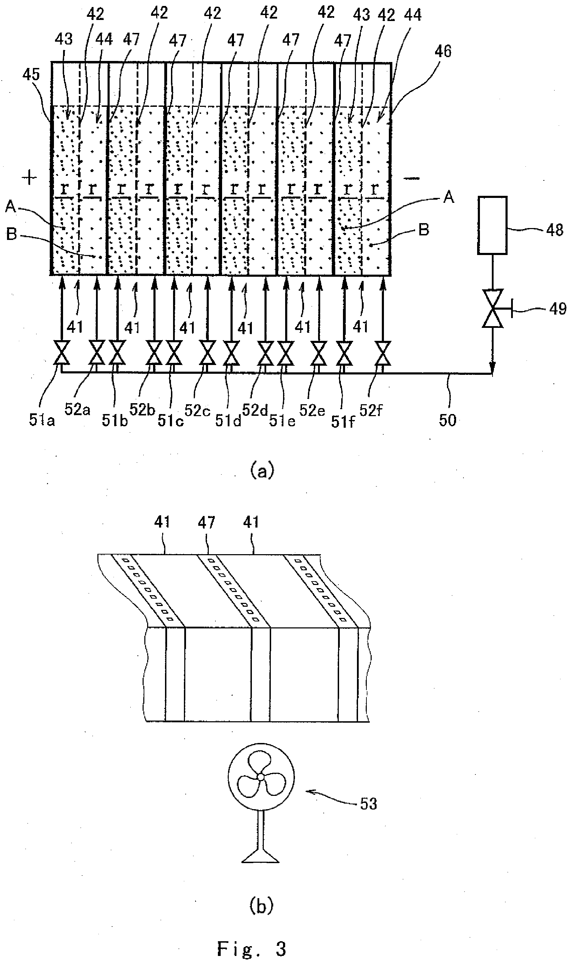

As shown in figure 3(a), this example has a configuration that six pairs of unit batteries 41 are connected in series. An unit battery 41 has a cathode vessel 43 and an anode vessel 44 connected with a hydrophobic separator (which does not have hydrophilic properties at all) 42 consisting of non woven fabric of polypropylene fiber interposed therebetween that permits passage of ions but does not passage of electron. The left end wall of the cathode vessel 43 of the unit battery 41 (No.1 unit) which is located at the left end can function as a cathode current collector 45, and the right end wall of the anode vessel 44 of the unit battery 41 (No.6 unit) which is located at the right end can function as an anode current collector 46. The right side wall of the anode vessel 44 of the unit battery 41 of No.1 unit and the left side wall of the cathode vessel 43 of the unit battery 41 of No.6 unit serve as both a dividing wall and a current collecting member 47. The current collecting member 47 functioning also as a dividing wall is interposed between adjacent two pairs of unit batteries which are located midway between No.1 unit and No.6 unit. Thus, from the unit battery 41 of No.1 unit on left end to the unit battery 41 of No.6 unit on right end, six pairs of unit batteries are connected in series through the current collecting member 47. KOH water solution as common electrolytic solution is filled into each cathode vessel 43 and each anode vessel 44. KOH water solution of the cathode vessel 43 contains nickel hydroxide powder A and KOH water solution of the anode vessel 44 contains hydrogen occluding alloy powder B.

The material which undergoes no deterioration such as corrosion in an alkali electrolytic solution, and does not permit passage of ions and has electrical conductive properties, can be used as the material for the current collecting member. Examples of the material for the current collecting member are nickel metal plate, nickel metal foil, carbon plate, nickel-pated iron, nickel-plated stainless steel, nickel-plated carbon and the like.

Since the separator 42 is hydrophobic, an electrolytic solution was filled into the cathode vessel 43 and the anode vessel 44 in the same way as the first embodiment.

In figure 3(a), oxygen gas can be supplied from an oxygen gas cylinder 48 in which high-pressure oxygen gas is filled to the cathode vessel 43 and the anode vessel 44 of each unit battery 41 through a pressure regulating valve 49 and a route 50. That is, via the route 50, by opening or closing valves 51a, 51b, 51 c, 51 d, 51 e, and 51f provided on each branched route to six cathode vessels 43 and valves 52a, 52b, 52c, 52d, 52e, and 52f provided on each branched route to six anode vessels 44, oxygen gas can be supplied to both cathode vessel 43 and anode vessel 44 or the cathode vessel 43 alone or the anode vessel 44 alone. The oxygen gas is reacted with surplus hydrogen gas inside the anode vessel 44 to be converted to water. Thus, oxygen gas suppied to the anode vessel 44 is reacted with surplus hydrogen gas inside the anode vessel 44 to be converted to water, and oxygen gas suppied to the cathode vessel 43 permeates through the separator 42 and is reacted with surplus hydrogen gas inside the anode vessel 44 to be converted to water.

Next, in the airtight type nickel hydrogen battery shown in figure 3(a), a test was conducted for verifying the effect of controlling the increase in internal pressure of the anode vessel 44 as described below: Oxygen gas of 2 kg/cm² was supplied from the oxygen gas cylinder 48 in which high-pressure (20 kg/cm²) oxygen gas was filled to each cathode vessel 43 and each anode vessel 44 of six pairs of unit batteries 41 through the pressure regulating valve 49. The result of the test will be described below.

The cathode current collector 45 and the anode current collector 46 were connected to the load means (not shown:incandescent lamp) and a discharging was continued for one hour. As a result, the internal pressure of each anode vessel 44 of each unit battery 41 (a volume of vacant portion of the anode vessel 44 of the unit battery 41 without electrolytic solution is 0.0012m³) increased up to 1 MPa.

And so, oxygen gas of 2 kg/cm² was supplied from the oxygen gas cylinder 48 to each cathode vessel 43 and each anode vessel 44 of six pairs of unit batteries 41 through the pressure regulating valve 49 for one hour. As a result, the internal pressure of each anode vessel 44 of each unit battery 41 dropped to 0.1 MPa.

As described above, heat is generated due to a cell reaction in the battery. Particularly, in accordance with the airtight type battery, a person skiilled in the art cannot think little of heat generated by the cell reaction. Accordingly, the airtight type battery is preferably provided with heat exchanger structure.

The conventional cylindrical battery or cubic battery or rectangular parallele-piped battery have a cooling structure that the outside of the battery casing is cooled. Therefore, it is difficult to attain the fixed cooling effect. Because in any of the cylindrical battery, cubic battery or rectangular parallele-piped battery, the direction for transmitting heat is perpendicular to the location of electrodes in the disposed direction of the separator and the active material. For example, in case of cylindrical battery, the heat shall be transmitted to the radius direction. In short, it is necessary to transmit heat to the outside through the layered separator and the active material.

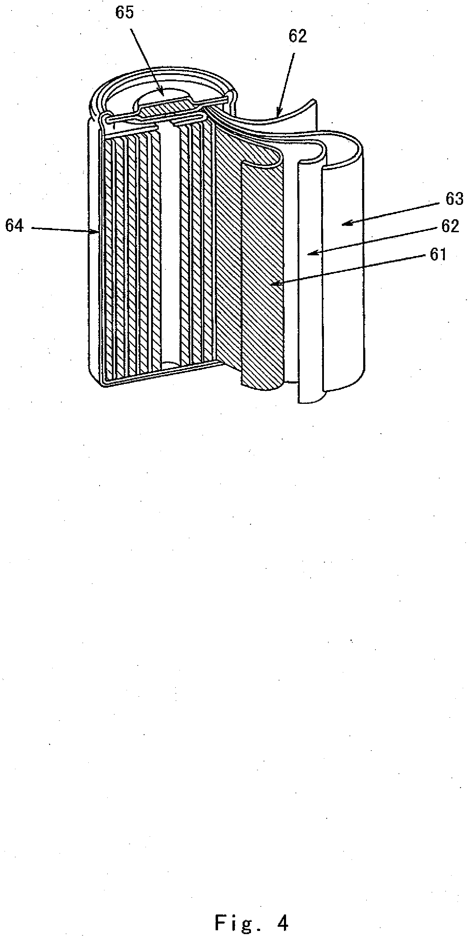

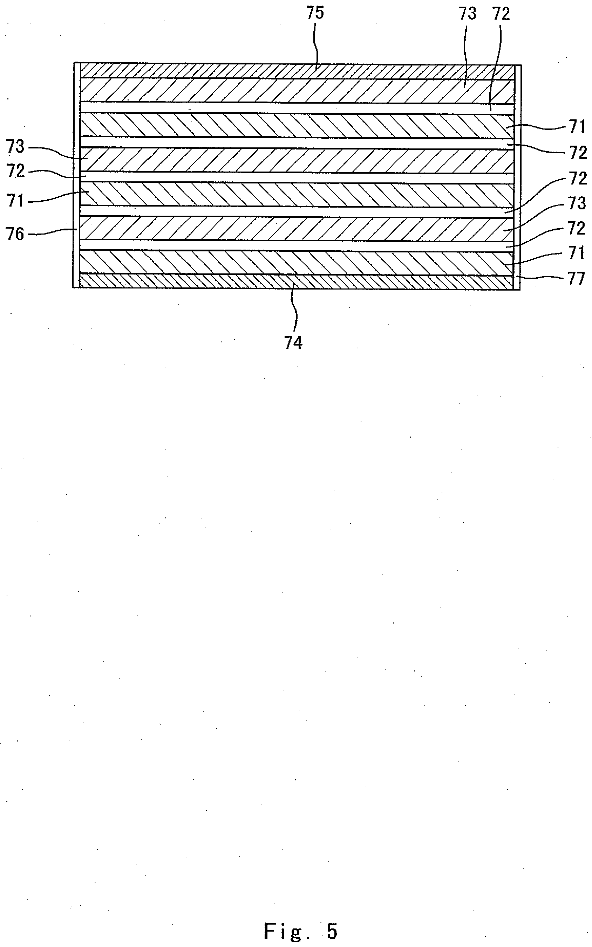

One example of cylindrical battery is shown in figure 4. In figure 4, a cathode active material sheet 61, an ion permeable separator 62, an anode active material sheet 63 and the ion permeable separator 62 are piled in that order to be wound spiral-shaped. Thus the cylindrical battery can be obtained. In this cylindrical battery, a casing 64 is an anode terminal, and a cap 65 is a cathode terminal. One example of rectangular parallele-piped battery is shown in figure 5. In figure 5, a cathode active material sheet 71, an ion permeable separator 72, an anode active material sheet 73 and the ion permeable separator 72 are piled in that order. Thus the rectangular parallele-piped battery can be obtained. In this rectangular parallele-piped battery, one end wall 74 is a cathode terminal, and the other end wall 75 is an anode terminal, and side walls 76 and 77 are insulators.

In the battery shown in figure 4, it is necessary to transmit the heat in the perpendicular direction (radius direction) to the layered direction (circumference direction) of the active material sheet and the separator. But it is difficult to attain a good heat transmission through multi-layered materials. Rather each layer serves as an insulator (blocking heat transmission). Particularly, since the separators consisting of fiber having low heat conductivity or porous plastic are layered one upon the other, heat conductivity becomes considerably low. In the battery shown in figure 5, it is also necessary to transmit the heat in the perpendicular direction to the layered direction (horizontal direction) of the active material sheet and the separator. But it is difficult to attain a good heat transmission through multi-layered materials. Rather each layer serves as an insulator (blocking heat transmissiion).

Moreover, if the battery is becoming larger in size, the heating surface area raises the volume to only power of 2/3, and the heat transmission length gets longer. As a result, even if the outside of the casing of the battery is cooled in figures 4 and 5, the inside of the battery cannot be cooled to the requisite temperature for keeping the cell reaction.

And so, in the battery structure shown in figure 3(a), if the current collecting member 47 doubling as a dividing wall has a porous structure and the heating surface area is getting larger, the porous current collecting member 47 serves also as a heat exchager member. Accordingly, heat generated by the cell reaction is radiated through the porous current collecting member 47 and deterioration of the battery can be reduced. On the other hand, in addition to the usage of the collecting member 47 as heat radiation member, the current collecting member 47 can be also used as heat storage member. That is, if the battery consisting of airtight structure is full of heat generated by the cell reaction, it leads to deterioration of the battery. Accordingly, it is necessary to radiate a fixed amount of heat from the battery. But, in order to conduct the cell reaction smoothly, the temperature of the battery constituent member is preferably within the required range (about 25 °C to 50 °C). Therefore, in place of radiating heat complusively from the porous current collecting member 47, an insulator can be applied to the outside of part of the porous current collecting member 47 so as to decrease heat radiation by making the temperature of the battery constituent member about 25 °C or more. When a heat radiation plate is forcedly cooled by a fan, if the temperature of the battery constituent member is less than the required temperature for keeping the cell reaction, heat radiation can be reduced by stopping the fan.

If the battery is getting larger in size, the surface area increases. Therefore, only cooling the surface of the battery is insufficient to cool the inside of the battery. In this case, as shown in figure 3(a), if the battery has a configuration which consists of plural battery units layered one upon the other, it is possible to cool effectively the inside of the battery by cooling a dividing wall (current collecting member 47) partitioning each battery unit. The current collecting member 47 doubling as a dividing wall is charged with electricity. As shown in figure 3(b), the current collecting member 47 consisting of porous aluminum plate is closely connected to the battery unit 41 having the cathode vessel and the anode vessel connected with a separator interposed therebetween. Therefore, heat as well as electron can be conducted through the current collecting member 47. In order to radiate heat effectively by the current collecting member 47, a fan 53 for supplying cooling air was installed below the unit batteries. But, when overcharging of 120 % was conducted at a room temperature under stopping fan, the temperature of thermometer inside the battery rised up to about 100 °C two hours later.

And so cooling air was suppied to the layered battery consisting of six pairs of battery units by starting the fan 53. As a result, the temperature of thermometer inside the battery rised up to only about 10 °C above the room temperature (about 25 °C) two hours later under overcharging of 120 %.

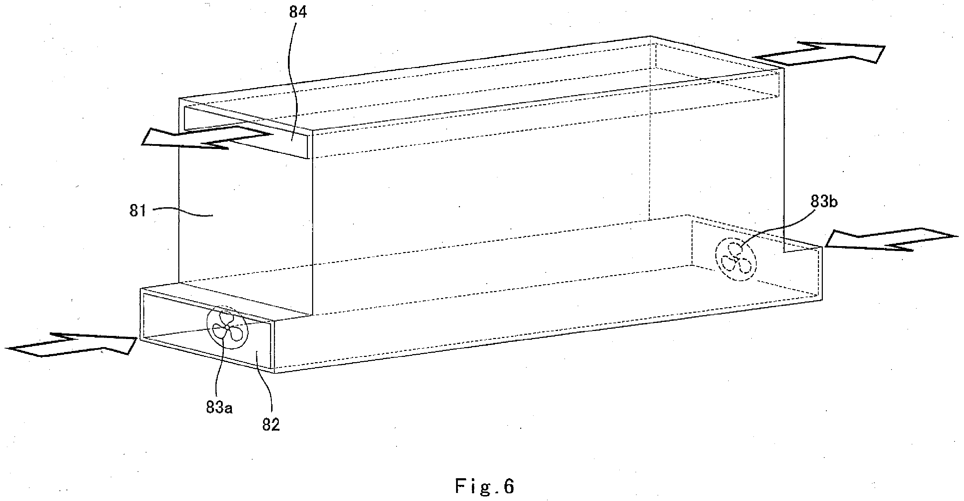

Figure 6 is a perspective view showing a battery unit multilayer 81 with a heat exchanger structure of the present inveniton which is cooled by a fan and a wind tunnel (air carrying space). The battery unit multilayer 81 has an air carrying space 82 for carrying air in the lower part. Air inhaled by air intake fans 83a and 83b is emitted to the outside from an air carrying space 84 in the upper part through the air carrying space 82 and heat transmitting space inside the battery unit multilayer 81., The arrow of figure 6 denotes a direction of air ventilation.

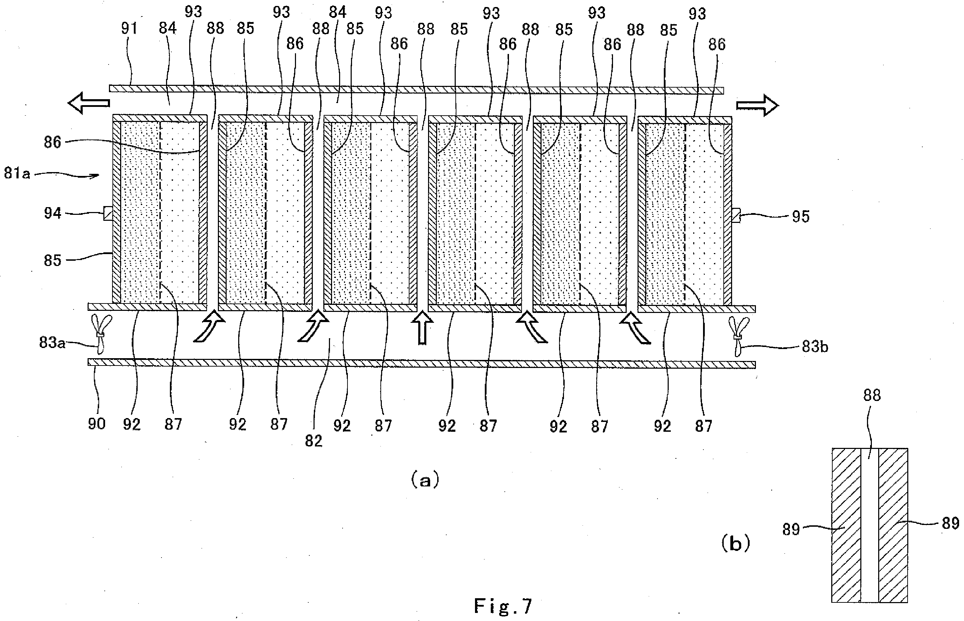

Figure 7 (a) is a view showing longitudinal section of one example of a battery unit multilayer with a heat exchanger structure. A battery unit multilayer 81 a has a configuration which consists of six battery units layered one upon the other. Each battery unit has the following constitution: An electrolytic solution is filled between a cathode plate 85 and an anode plate 83. A separator 87, which undergoes no deterioration such as corrosion in an alkali electrolytic solution and permits passage of ions but does not permit passage of electron, is interposed between a cathode vessel (left side of the separator 87) and an anode vessel (right side of the separator 87). The cathode vessel comprises a cathode active material and the anode vessel comprises an anode active material. An air carrying space 88, in which air inhaled from air intake fans 83a and 83b is carried, is provided in the vertical direction between adjacent two battery units.

An air carrying space 88 is not provided over the whole space between the cathode plate 85 and the anode plate 86 but provided in the vertical direction of the middle portion of the cathode plate 85 and the anode plate 86. As shown in figure 7(b), the air carrying space 88 is provided with current collecting members 89 on both sides. The cathode plate 85 is connected to the anode plate 86 via the current conducting member 89 interposed therebetween.

The separator 87 can be made of a material such as woven fabric or non woven fabric made of poytetrafluoroethylene, polyethylene, nylon, polypropylene and the like or membrane filter. The current conducting member 89 can be made of a material which undergoes no deterioration such as corrosion in alkali electrolytic solution, and does not permit passage of ions, and has electrical conductive properties. For example, any one selected from the group consisting of a nickel metal plate, a nickel metal foil, a carbon plate, nickel-plated iron, nickel-plated stainless steel, nickel-plated carbon and the like may be used as a material of the current conducting member 89.

Numerals 90, 91, 92 and 93 denote insulators. Numeral 94 denotes a cathode terminal, and numeral 95 denotes an anode terminal.

As described above, the battery unit shown in figure 7(a) has the following constitution: An electrolytic solution is filled between a cathode plate 85 and an anode plate 86. A separator 87, which undergoes no deterioration such as corrosion in an alkali electrolytic solution and permits passage of ions but does not permit passage of electron, is interposed between a cathode vessel and an anode vessel. The cathode vessel comprises a cathode active material and the anode vessel comprises an anode active material. In place of the battery unit of the above constitution, the battery unit consisting of the airtight type nickel hydrogen battery shown in figure 2 or the unit battery 41 shown in figure 3 may be used.

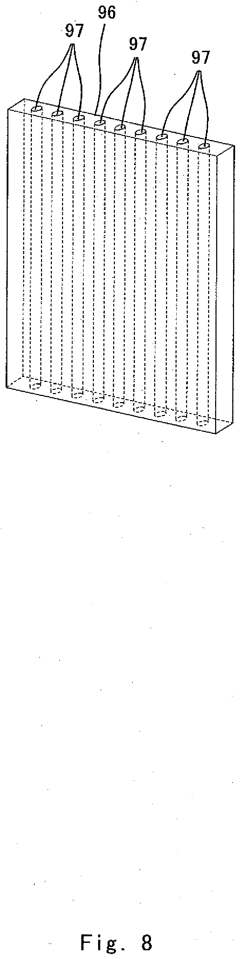

Figure 8 is a perspective view showing one example of a heat exchanger plate 96. The heat exchanger plate 96 is made of nickel-plated aluminum. Many air carrying spaces 97 are provided in the vertical direction. In figure 7, the heat exchanger plate 96 may be interposed between the cathode plate 85 and the anode plate 86, and air inhaled by intake fans 83a and 83b can be carried through air carrying space 97. The heat exchanger plate is in contact with both of the cathode plate and the anode plate, and the cathode plate is conneted to the anode plate by the heat exchanger plate. Therefore, the heat exchanger plate has preferably a good electrical conductivity. Aluminum has a relatively low electrical resistance and a relatively high heat conductivity. And so, aluminum has the properties suitable for the heat exchanger plate of the present invention. But aluminum has a disadvantage to be liable to be oxidized. If an aluminum plate is nickel-plated, electrical resistance can be reduced by nickel-plating. Accordingly, a nickel-plated aluminum plate is still preferable for the heat exchanger plate of the present invention.

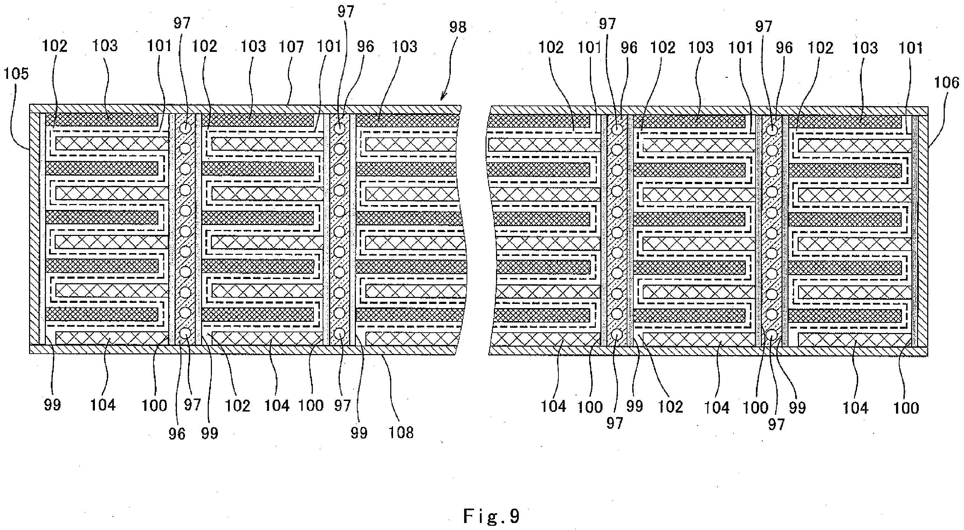

Figure 9 is a view showing a lateral section of an embodiment of a battery unit multilayer 98 with a heat exchanger structure in accordance with the present invention. The battery unit multilayer 98 has a configuration which consists of plural battery units layered one upon the other as described below. A bellows-shaped separator 101, which undergoes no deterioration such as corrosion in alkali electrolytic solution and permits passage of ions but does not permit passage of electron, is interposed between a cathode current elector 99 and an anode current collector 100 which are disposed face to face with each other so as to come close to the current collectors alternately. A cathode sheet 103 comprising a cathode active material is located together with an electrolytic solution 102 in a space defined by the bellows-shaped separator 101 and the cathode current collector 99. An anode sheet 104 comprising an anode active material is located together with an electrolytic solution 102 in a space defined by the bellows-shaped separator 101 and the anode current collector 100. The cathode sheet 103 and the anode sheet 104 are located alternately facing each other across the separator 101. The cathode sheet 103 is in contact with the cathode current collector 99 and the anode sheet 104 is in contact with the anode current collector 100. The heat exchanger plate 96 shown in figure 8 is interposed between adjacent two battery units so as to be in contact with both of the cathode current collector 99 of one battery unit and the anode current collector 100 of the other battery unit. The air carrying space 97 of the heat exchanger plate 96 is located coincidently with the up-and-down direction of the cathode sheet 103 and the anode sheet 104.

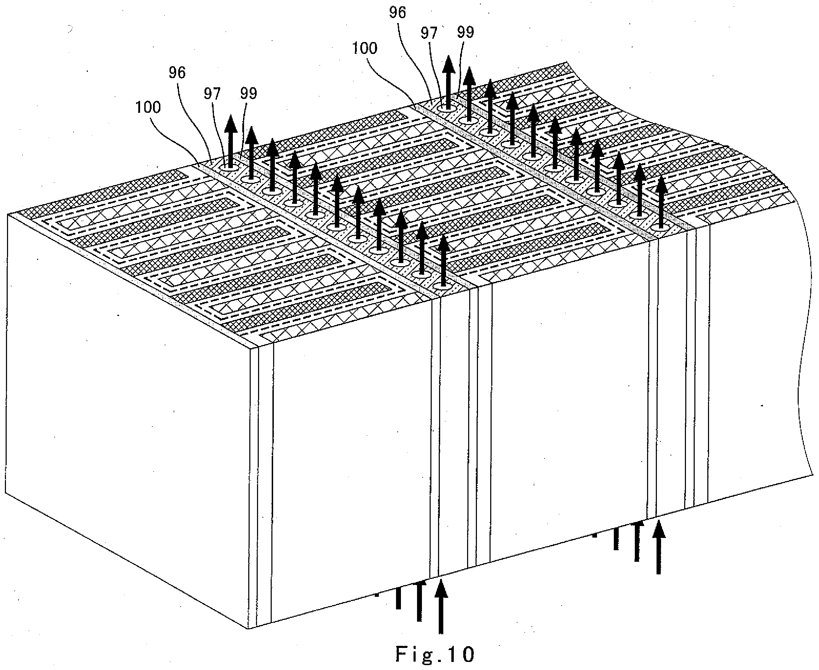

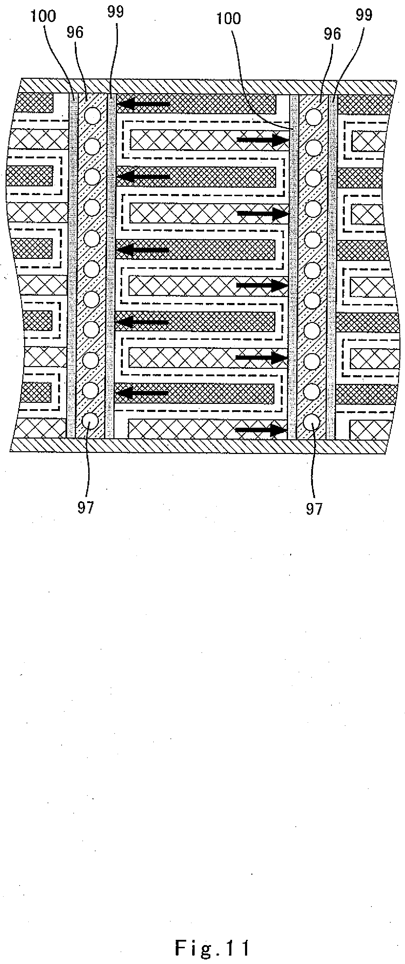

As shown in figure 9, the cathode current collector 99 and the anode current collector 100 are made of metal having good heat condutivity together with being charged with electricity. The cathode current collector 99 and the anode current collector 100 are directly in contact with the cathode sheet 103 and the anode sheet 104 respectively. Furthermore, the cathode current collector 99 and the anode current collector 100 are linked to each other by the heat exchanger plate 96 and the heat exchanger plate 96 are in contact with both of the cathode current collector 99 and the anode current collector 100. Accordingly, since air inside the air carrying space 97 of the heat exchanger plate 96 is carried along the direction of the arrows shown in figure 10, heat generated by the cell reaction is effectively transmitted along the direction of the arrows shown in figure 11 so as to be emitted to the outside. As a result, it is possible to keep the temperature of the battery unit multilayer within the range suitable for cunducting the cell reaction smoothly.

Numerals 105, 106, 107 and 108 denote an unifying cathode current collector, an unifying anode current collector, an insulating plate and an insulating plate respectively.

The cathode sheet can be obtained by adding an electrically conductive filler and a resin and a solvent to a cathode active material so as to obtain a pastelike material, and applying the pastelike material to a base sheet, and forming the base sheet into the shape of a plate, and curing the plate. The anode sheet can be obtained by adding an electrically conductive filler and a resin and a solvent to an anode active material so as to obtain a pastelike material, and applying the pastelike material to a base sheet, and forming the base sheet into the shape of a plate, and curing the plate. All of well-known cathode active material and anode active material can be used as active materials of the present invention. The electrically conductive filler may be any one selected from carbon fibers, nickel-plated carbon fibers, carbon particles, nickel-plated carbon particles, nickel-plated organic fibers, fibrous nickel, nickel particles and nickel foil or any combination thereof. The resin may be a thermoplastic resin having a softening temperature of 120 °C or less, a resin having a curing temperature ranging from room temperature to 120 °C, a resin soluble in a solvent having a vaporizing temperature of 120 °C or less, a resin soluble in a water-soluble solvent or a resin soluble in an alcohol-soluble solvent. A metalic plate having electrical conductivity such as nickel plate can be used as a base sheet.

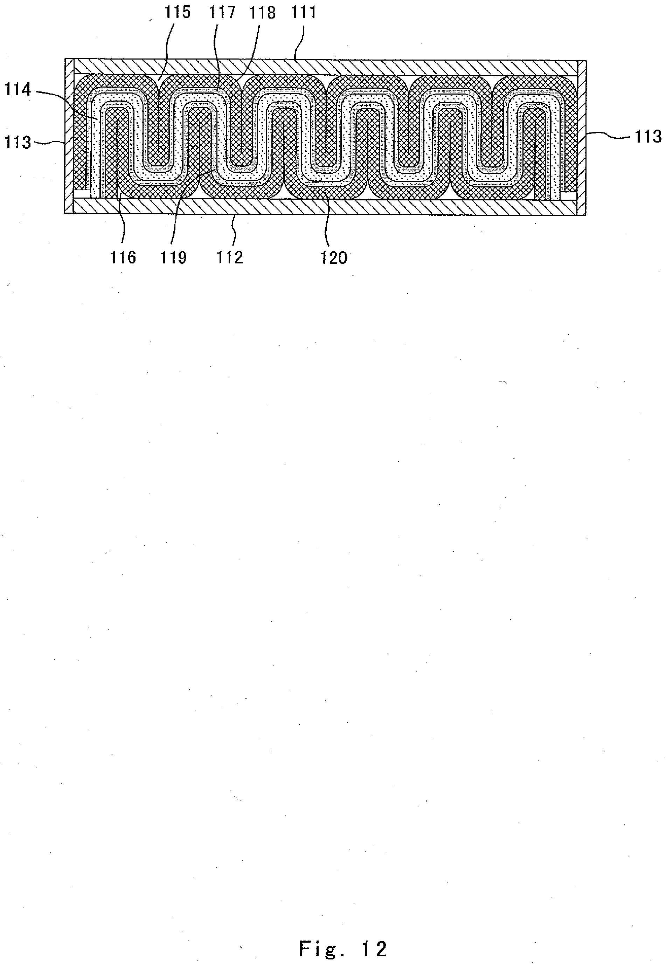

If the battery has a capacitor component, the capacitor component may do very first and short charging and discharging, and the battery may make up the shortage. As a result, it is possible to improve the durability of the battery. The reason is as follows: Since the internal pressure of the capacitor component is smaller than the internal pressure of the battery, the capacitor component conducts mainly very first and short chraging and discharging. Accordingly, it puts only a light load to the battery. In order to obtain this advantage, a capacitor component having large capacity may be interposed between a separator and a cathode active material as well as between a separator and an anode active material. For example, the battery with a structure shown in figure 12 can be adopted.

In figure 12, numerals 111, 112 and 113 denote a cathode current collector, an anode current collector and an insulator respectively. An electrolytic solution fills a vessel surrounded by the above components. The vessel is divided into two portions of a cathode vessel 115 and an anode vessel 116 by an ion-permeble bellows-shaped separator 114 which undergoes no deterioration such as corrosion in alkali electorlytic solution and does not permit passage of electron but permits passage of ions. In the cathode vessel 115, a bellows-shaped non woven fabric 117 made of polypropylene fiber including a cathode active material is in contact with the whole surface of the separator114, and a bellows-shaped formed matter 118 made of nickel foam including a cathode active material is in contact with the whole surface of the non woven fabric 117 and part of the surface of the cathode current collector 111. In the anode vessel 116, a bellows-shaped non woven fabric 119 made of polypropylene fiber including an anode active material is in contact with the whole surface of the separator114, and a bellows-shaped formed matter 120 made of nickel foam including an anode active material is in contact with the whole surface of the non woven fabric 119 and part of the surface of the anode current collector 112. In figure 12, the bellows-shaped non woven fabric 117 made of polypropylene fiber and a bellows-shaped non woven fabric 119 made of polypropylene fiber are correspond to the capacitor components.

In the airtight type battery shown in figure 12, in case that the bellows-shaped non woven fabric 117 made of polypropylene fiber and a bellows-shaped non woven fabric 119 made of polypropylene fiber were removed from the battery, the cycle life of the battery was 4000 cycle. But, as shown in figure 12, in case that the battery had the bellows-shaped non woven fabric 117 made of polypropylene fiber and the bellows-shaped non woven fabric 119 made of polypropylene fiber, the cycle life of the battery was above 10000 cycle (The life of the battery has not reached the end even at the 10000 cycles).

### Industrial Applicability

The battery of the present invention is suitable for the battery which can be used as power for tool, toy, electric light, camera, radio, personal computer, video recorder, mobile phone and the like.

## Claims

1. A heat exchanger structure of battery unit multilayer comprising a plurality of battery units layered one upon the other,
each battery unit comprising:
an electrolytic solution filled between a cathode current collector and an anode current collector that are disposed face to face with each other;
a plurality of cathode sheets containing a cathode active material and extending from the cathode current collector towards the anode current collector;
a plurality of anode sheets containing an anode active material and extending from the anode current collector towards the cathode current collector, wherein the cathode sheets and the anode sheets are installed alternately facing each other; and
a separator that permits passage of ions but does not permit passage of electrons interposed between adjacent cathode and anode sheets,
wherein a heat exchanger plate made of nickel-plated aluminium is interposed between two adjacent battery units so as to be in contact with the cathode current collector of one battery unit and the anode current collector of the other battery unit, and a route for heat transmitting medium consisting of gas or liquid is provided inside the heat exchanger plate.

2. A heat exchanger structure of battery unit multilayer as claimed in claim 1, wherein the battery unit multilayer is airtight and the separator is made of hydrophobic material.

## Patentansprüche

1. Wärmetauscherstruktur einer mehrschichtigen Batterieeinheit, umfassend mehrere übereinandergeschichtete Batterieeinheiten,
wobei jede Batterieeinheit umfasst:
- eine elektrolytische Lösung, die zwischen einem Kathoden-Stromabnehmer und einem Anoden-Stromabnehmer eingefüllt ist, die einander zugewandt angeordnet sind;
- mehrere Kathodenbleche, die ein aktives Kathodenmaterial enthalten und
- sich vom Kathoden-Stromabnehmer zum Anoden-Stromabnehmer erstrecken;
- mehrere Anodenbleche, die ein aktives Anodenmaterial enthalten und sich vom Anoden-Stromabnehmer zum Kathoden-Stromabnehmer erstrecken, wobei die Kathodenbleche und die Anodenbleche abwechselnd einander zugewandt eingebaut sind; und
- einen Separator, der einen Durchgang von Ionen erlaubt, aber einen Durchgang von Elektronen nicht erlaubt, der zwischen benachbarten Kathoden- und Anodenblechen eingefügt ist,
wobei eine Wärmetauscherplatte, die aus nickelplattiertem Aluminium besteht, zwischen zwei benachbarten Batterieeinheiten eingefügt ist, so dass sie mit dem Kathoden-Stromabnehmer einer Batterieeinheit und dem Anoden-Stromabnehmer der anderen Batterieeinheit in Kontakt steht, und ein Weg für ein wärmeübertragendes Medium, das aus Gas oder Flüssigkeit besteht, im Inneren der Wärmetauscherplatte vorgesehen ist.

2. Wärmetauscherstruktur einer mehrschichtigen Batterieeinheit nach Anspruch 1, wobei die mehrschichtige Batterieeinheit luftdicht ist und der Separator aus hydrophobem Material besteht.

## Revendications

1. Structure échangeuse de chaleur de multicouche d'éléments de batterie comprenant une pluralité d'éléments de batterie en couches l'un sur l'autre, chaque élément de batterie comprenant :
une solution électrolytique confinée entre un collecteur de courant cathodique et un collecteur de courant anodique qui sont disposés face à face mutuellement ;
une pluralité de feuilles cathodiques contenant un matériau cathodique actif et s'étendant du collecteur de courant cathodique vers le collecteur de courant anodique ;
une pluralité de feuilles anodiques contenant un matériau anodique actif et s'étendant du collecteur de courant anodique vers le collecteur de courant cathodique, dans laquelle les feuilles cathodiques et les feuilles anodiques sont installées en alternance les unes en regard des autres ; et
un séparateur qui permet le passage d'ions, mais ne permet pas le passage d'électrons, intercalé entre les feuilles cathodiques et anodiques adjacentes,
dans laquelle une plaque échangeuse de chaleur faite d'aluminium plaqué de nickel est intercalée entre deux éléments de batterie adjacents de manière à être en contact avec le collecteur de courant cathodique d'un élément de batterie et le collecteur de courant anodique de l'autre élément de batterie, et une voie pour l'agent de transfert de chaleur constitué de gaz ou de liquide est fournie à l'intérieur de la plaque échangeuse de chaleur.

2. Structure échangeuse de chaleur de multicouche d'éléments de batterie selon la revendication 1, dans laquelle la multicouche d'éléments de batterie est étanche à l'air et le séparateur est fait d'un matériau hydrophobe.
